# EUROPEAN PATENT SPECIFICATION

(11) **EP 4 346 367 B1**
(45) Date of publication and mention of the grant of the patent: **05.11.2025**
(21) Application number: 22731195.8
(22) Date of filing: 31.05.2022
(51) Int. Cl.: A01C 5/06, A01C 7/20, A01B 61/04

(54) **SOIL CULTIVATOR SEED DRILL**
SÄMASCHINE FÜR BODENKULTIVATOR
SEMOIR POUR CULTIVATEUR

(30) Priority: 04.06.2021 GB 202108010
(43) Date of publication of application: 10.04.2024
(73) Proprietor: Mzuri World Spolka z ograniczona odpowiedzialnoscia, 89-110 Smielin (PL)
(72) Inventor: LOLE, Christopher Martin, Peopleton Pershore Worcestershire WR10 2BF (GB)
(74) Representative: Patpol Kancelaria Patentowa Sp. z o.o.
(86) International application number: PCT/EP2022/064777
(87) International publication number: WO 2022/253840

(56) References cited:
- WO-A1-2016/048167
- WO-A1-2018/176136
- US-A1- 2012 210 920

## Description

### Field of the Invention

This invention relates to a soil cultivator seed drill. Such a seed drill is generally incorporated into an agricultural apparatus as a number of laterally spaced seed drills, the apparatus being adapted for towing behind a tractor or the like.

### Background to the Invention

A range of soil cultivator seed drills are available on the market to carry out cultivation of soil and sowing of seeds in a single pass, a technique generally known as direct drilling, band seeding, minimal tillage or strip tillage. Such cultivation combines in a single pass of the soil, minimal cultivation of the soil using tines and/or disc coulters to break up the soil only where seed is to be sown, leaving strips of undisturbed soil therebetween, followed by means for planting the seed in cultivated soil. Thus, this process involves cultivating only a targeted region of soil and leaving the crop residue on the surface between tilled strips, retaining moisture and organic matter to improve soil structure and fertility.

This technique moves away from the age-old tradition of providing well- cultivated soil, generally that had previously been ploughed, prior to casting seed into furrows or spaced-apart lines and packing the seeds for germination and growth. These separate techniques were clearly time-consuming, costly in terms of fuel usage required to carry out separate operations, environmentally unfriendly in view of the associated high CO2 emissions, and also often resulted in poor seed germination due to loss of moisture in the soil as a result of the multiple soil-disturbing operations. The repeated movement of heavy agricultural machinery across the soil also results in its compaction, known as a "pan", which hinders both drainage through the soil and downward growth of plant roots.

Agricultural machinery that allows multiple functions of opening the soil, seeding and fertilising in a single pass has been in use for in excess of twenty years. This includes a multi-function draft implement described by Handy in US5161472 and apparatus for depositing seed and fertiliser in the ground described by Beaujot in US5331907. Both apparatus have a front soil loosening member with a tine spaced rearwardly therefrom, with both being fixed in position. This makes it difficult to go around corners effectively or to avoid obstructions without encountering high resistance.

A further improvement is described by Lole in GB2484263. This apparatus includes a couple of frame members in the form of a front frame member and a rear frame member. The front frame member is adapted for attachment to a tractor or the like and carries soil-loosening members, or tines, spaced transversely across the frame in two staggered rows. The rear frame member is connected to the front frame member by adjustable chassis members and carries, and is supported by, a number of laterally spaced rotary members in the form of wheels for crumbling the soil loosened by the soil loosening members with each soil-loosening member being followed by a respective rotary member. Each rotary member is followed by a respective trailing seed sowing assembly also mounted on the rear frame, each seed-sowing assembly including a seeding tine, packing wheel and levelling tine. The soil loosening members are fixed to the front frame, while the seed-sowing assemblies are connected to the rear frame by an upright or vertical pivot axis to allow the seeding tines to move laterally when encountering an obstacle and to follow a curved path when not travelling in a straight line, for example in a headland. However, the use of a vertical pivot results in the resistance to lateral movement of the seed-sowing assemblies being substantially equal at any pivot angle and this can cause the seed-sowing assembly to move from side-to-side and not run straight when in use or to move the centre of gravity of the apparatus laterally when the seed-sowing assemblies have been raised. Such movements can cause the apparatus to bounce from side-to- side and not run straight and results in reduced efficiency, for example with the apparatus being more difficult to tow, and provides less accuracy for inter- row drilling of seeds.

WO2016048167A1 discloses openers for a seeder, configured to be adjustably engaged with a soil surface when in use; each opener having compliance to vertical and lateral excessive forces independently applied to soil- engaging parts: a fertiliser tine, a seed tine, a press wheel, a coulter, and a support wheel. The openers share a hydraulic circuit, linked to each internal frame-lifting ram so that localised rise and fall effects arising from soil surface irregularities are shared, maintaining a mean height. The seed tine of each opener is made liftable immediately the preceding fertiliser tine is displaced. The openers do not require external weight support.

All these known apparatus are fit-for-purpose, but have potential drawbacks for example during turning or towing of the apparatus. In addition, unnecessary movement of the seed-sowing assemblies and potentially other parts of the apparatus from side-to-side can give rise to excessive wear requiring more frequent replacement of the relevant part and, consequently, higher operating costs.

### Object of the Invention

It is an object of the present invention to provide a soil cultivator seed drill which overcomes, or at least ameliorates, the abovementioned problems.

### Summary of the Invention

According to the present invention there is provided a soil cultivator seed drill comprising:
a toolbar connection member;
a parallelogram assembly comprising a pair of substantially parallel arms, each connected at one end thereof to the toolbar connection member and at the other end thereof to a connecting member which interconnects the two other ends;
a seed delivery member mounted on the connecting member; and
a depth controlling member mounted on the connecting member for determining the depth at which the seed delivery member sows seed;
wherein the each parallel arm is connected to the toolbar connection member by way of a universal joint or by way of a pivot assembly which is pivotable about a substantially horizontal axis, and each of the parallel arms is connected to the connecting member by the other of a universal joint and a pivot assembly which is pivotable about a substantially horizontal axis, respectively.

Thus, each of the parallel arms may be connected to the toolbar by way of a respective universal joint and connected to the connecting member by way of a respective pivot assembly which is pivotable about a substantially horizontal axis.

However, alternatively each of the parallel arms may be connected to the toolbar by way of a respective pivot assembly which is pivotable about a substantially horizontal axis and connected to the connecting member by way of a respective universal joint.

The two universal joints may be located on an axis which is generally upright. Such axis may be substantially vertical or may be inclined to the vertical, for example in a range of 10 to 45 degrees, preferably 18 to 30 degrees, with an upper universal joint positioned rearwardly of a lower universal joint in a direction of forward movement of the seed drill. Thus, in this case the parallelogram assembly is located rearwardly of the toolbar connection member in the direction of forward movement of the seed drill. The seed delivery member may be mounted on the connecting member in a manner which allows the depth at which seed is sown to be adjusted relative to the connecting member.

The depth controlling member may be connected to that end of one of the parallel arms remote from the toolbar connection member by way of an arm and to that end of the other of the parallel arms by way of an adjustment mechanism which allows the position of the depth controlling member relative to the parallelogram assembly to be adjusted.

Biasing means, such as an adjustable hydraulic cylinder, may be extend between the parallel arms for controlling the stiffness of the parallelogram assembly.

The seed drill may further comprise a soil loosening assembly. The soil loosening assembly may extend forwardly of the toolbar connection member in the direction of forward movement of the seed drill.

The soil loosening assembly may include a tine for creating a trench filled with loosened soil. The tine may be mounted so as to allow the depth of penetration thereof into the soil to be adjusted. The tine may also be mounted for rotation about a substantially horizontal axis in a rearward direction relative to the direction of forward movement of the seed drill. Biasing means, such as an adjustable hydraulic cylinder may be provided to control rearward movement of the tine.

A disc coulter may be provided forward of the tine in the direction of forward movement of the seed drill. The disc coulter may be mounted by way of a caster assembly which is pivotable about an upright axis. The caster assembly may be mounted on an arm that is pivotable about a substantially horizontal axis. Biasing means, such as a compression spring, may be provided for resisting upward movement of the disc coulter.

The tine, and disc coulter where provided, are in line with the seed delivery member such that in use the seed delivery member sows seed into a trench filled with loosened soil created by the tine.

### Brief Description of the Drawings

For a better understanding of the present invention and to show more clearly how it may be carried into effect reference will now be made, by way of example, to the accompanying drawings in which:

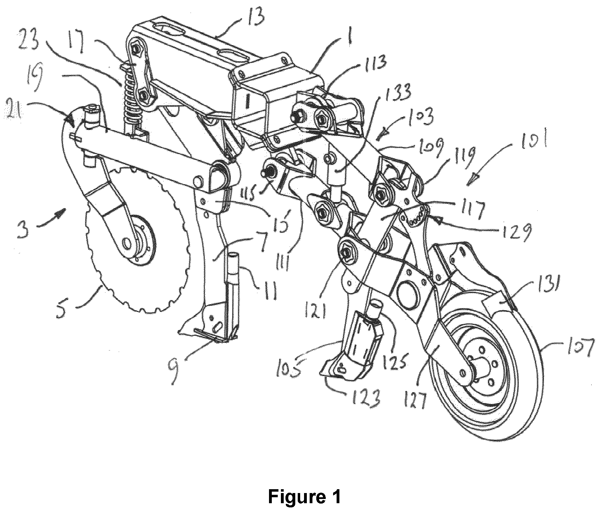

Figure 1 is a rear perspective view of one embodiment of a soil cultivator seed drill according to the present invention;

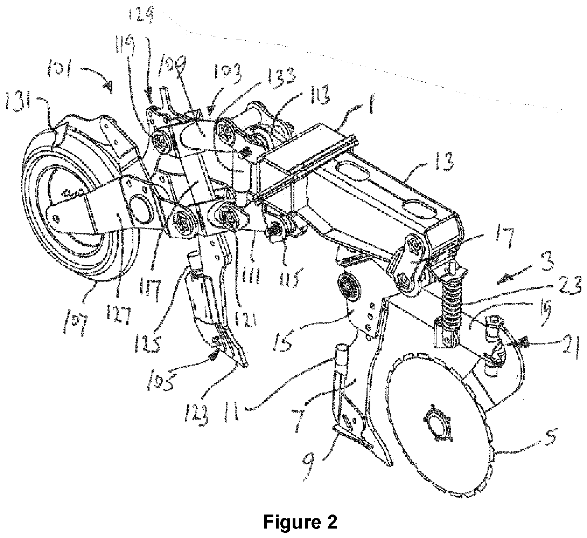

Figure 2 is a front perspective view of the soil cultivator seed drill shown in Figure 1;

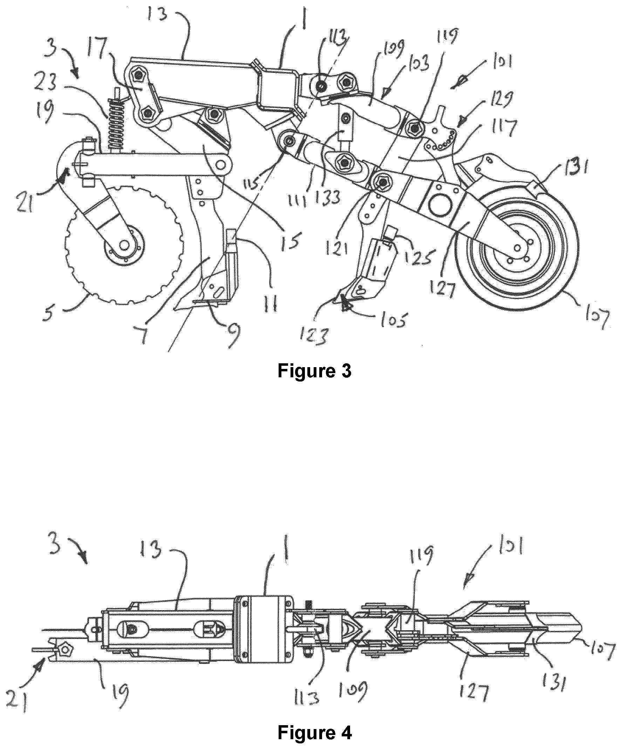

Figure 3 is a side view of the soil cultivator seed drill shown in Figure 1; and
Figure 4 is a top view of the soil cultivator seed drill shown in Figure 1.

### Description of the Invention

The figures show a soil cultivator seed drill which can be attached to a frame member (not shown) (or toolbar) of an agricultural apparatus by way of a toolbar connection member, for example in the form of a clamp 1. The configuration of the clamp as shown provides for attachment to a box-section frame, but other configurations are clearly possible. The clamp allows multiple seed drills to be positioned along the frame member transversely of the direction of movement to the apparatus with the number of seed drills and the lateral spacing therebetween being determined by the user. Moreover, the seed drills may be secured to multiple frame members which are spaced one behind the other in the direction of movement such that the seed drills are arranged in two or more rows and are staggered with respect to each other. Other conventional features of the agricultural apparatus include a three-point linkage for attachment to a tractor, wheels for supporting the frame members, a seed hopper, a fertiliser hopper and means for delivering seed and fertiliser for deposition in the soil as will be explained in more detail hereinafter in relation to the seed drill. In practice, the frame members may be mounted on a spine member which is supported by the wheels and which carries the hoppers and delivery means. The frame members may be pivotally mounted on the spine member in a manner which allows the frame members to be pivoted upwardly, for example to reduce the overall width of the apparatus when it is being towed between locations.

Extending forwardly of the clamp 1 in the direction of movement is a soil loosening assembly 3 which includes a disc coulter 5 mounted in front of and in line with a front tine 7 (in the direction of movement). The disc coulter serves to cut an incision in the soil and to cut through any crop residue or other surface material, while the tine serves to create a trench filled with loosened soil. The tine 7 is provided at the lower end thereof with a wing 9 and with a delivery tube 11 for delivering optional fertiliser or the like to a position below and to the rear of the wing 9. The coulter 5 and front tine 7 are mounted to the clamp 1 by way of a stump 13 which extends forwardly therefrom. A plate 15 is mounted beneath a forward region of the stump 13 and is pivotable about a substantially horizontal axis. The front tine 7 is mounted on and depends from the pivotable plate 15 in a manner which allows the depth of penetration of the tine into the soil to be adjusted. Biasing means in the form of an adjustable hydraulic cylinder 17 controls the resistance of the front tine 7 to rearward movement, for example when an obstruction is encountered in the soil, such as a rock or large stone. Such rearward movement allows the front tine to lift and pass over the obstruction. The disc coulter 5 is mounted at the forward end (in the direction of movement) of an arm 19 which in turn is mounted for pivoting movement about a substantially horizontal axis on the pivotable plate 15 and extends forwardly therefrom. Disc coulter 5 is mounted on the arm 19 by way of a caster assembly 21 which is pivotable about an upright axis with the disc coulter itself positioned rearwardly of the upright axis to allow the disc coulter to pivot and move laterally as the seed drill moves forwards. Biasing means in the form of a compression spring 23 is provided between the coulter arm 19 and the forwardly extending stump 13 to resist upward movement of the disc coulter and therefore to apply downward pressure to maintain the coulter in the ground while allowing upward deflection if necessary.

Extending rearwardly of the clamp 1 in the direction of movement is a seed delivery assembly 101 which comprises a parallelogram assembly 103 mounted to the clamp 1 , a seed delivery member 105 and a depth controlling member in the form of a depth wheel 107 positioned rearwardly of, and in line with, the seed delivery member. The seed delivery member and the depth wheel are both mounted to an end of the parallelogram assembly remote from the clamp.

The parallelogram assembly 103 comprises an upper arm 109 and a parallel lower arm 111 , the upper arm being mounted on the clamp 1 at one end thereof by way of a first universal joint (or ball joint) 113 and the lower arm being mounted on the clamp at one end thereof by way of a second universal joint (or ball joint) 115. The first universal joint is positioned above and rearwardly of the second universal joint in the direction of movement of the seed drill. An axis passing through the first and second universal joints defines a forward arm of the parallelogram assembly. The other end of each of the arms is connected to a connecting member 117 in each case by way of a pivot arrangement 119, 121 which is pivotable about a substantially horizontal axis. The connecting member 117 defines a rearward arm of the parallelogram assembly. The seed delivery member 105 is mounted on the connecting member 117 in a manner which allows the depth at which seed is to be sown to be adjusted relative to the connecting member 117. The seed delivery member 105 terminates at a free end thereof in a seed delivery foot 123 and includes a seed delivery tube 125 for delivering seed from a seed delivery assembly which for simplicity is not shown. The depth wheel 107 is mounted to the lower pivot arrangement 121 by way of an arm 127 and to the upper pivot arrangement 119 by way of an adjustment mechanism 129 which allows the position of the depth wheel relative to the parallelogram assembly to be adjusted.

The depth wheel 107 therefore controls the depth at which seed is sown as the seed drill moves forwardly over the ground. A scraper 131 is provided for removing any excess soil that may become attached to the depth wheel. Biasing means in the form of an adjustable hydraulic cylinder 133 extends between the upper and lower arms 109, 111 of the parallelogram assembly for controlling the stiffness of the parallelogram assembly and the downward force exerted by the depth wheel 107.

Because the first and second universal joints 113, 115 form part of the parallelogram assembly 103, and are therefore interlinked, movement of the joints is constrained in that each joint will move in unison with the others. Effectively, movement is possible simultaneously about a first axis passing through the two universal joints and about a substantially horizontal second axis perpendicular to the first axis. This allows the seed delivery member 105 and depth wheel 107 to move simultaneously laterally from side-to-side and up-and-down as the apparatus moves. The use of a parallelogram assembly allows the seed delivery member 105 to move up and down while maintaining a constant orientation of the seed delivery foot 123 relative to the surface of the soil. In this way, seed delivery is effected in a constant orientation and leads to improved seed distribution within the soil. The first axis need not be vertical and, as illustrated, may advantageously be at an angle to the vertical with the second universal joint positioned forwardly of the second universal joint in the forward direction of movement. For example, the angle of inclination may be such that the first axis passes substantially through the free end region of the front tine 7, but this is not essential and it should be noted the free end of the front tine does vary with the depth to which the tine is set to operate. For example, when the first axis is inclined, inclination of the first axis may be in the range of 10 to 45 degrees to the vertical, preferably 18 to 30 degrees. Inclination of the first axis in this manner has the effect that, as the seed delivery member 105 and depth wheel 107 move laterally from side- to-side, as the lateral extent of movement increases then the seed delivery member and depth wheel are progressively raised. The effect of gravity is therefore to resist raising of the seed delivery member and depth wheel and to urge them towards their lowest point which corresponds to a point where they are central. The inclination of the first axis thus gives rise to a self-centring effect of the seed delivery member and depth wheel and encourages them to follow the trench formed by the front tine 7 more closely resulting in improved accuracy in respect of seed deposition.

The first and second universal joints 113, 115 effectively replace a pivot arrangement that would otherwise be needed to provide the first axis together with two further pivot arrangements that would be needed to provide pivoting about a substantially horizontal axis at the ends of the arms 109, 111 where they are connected to the clamp 1. The illustrated arrangement reduces the number of components and is more compact and lightweight compared with more complex arrangement it replaces. Moreover, the use of two universal joints simplifies manufacture by eliminating any risk of misalignment, while fewer moving parts contributes to less wear and a longer working life.

In use of the soil cultivator seed drill shown in the drawings, the disc coulter 5 of the soil loosening assembly 3 cuts a slit through the soil and also through any crop residue or other surface material, while being deflected upwardly and/or laterally around any obstructions. The front tine 7 follows in the slit cut by the coulter 5 and forms a trench filled with loosened soil while also depositing fertiliser or the like in the trench, for example towards the bottom thereof, the tine being capable of being deflected rearwardly and upwardly in the event it should encounter an obstruction. The soil loosening assembly 3 is followed by the seed delivery assembly 101 with the seed delivery member 105 being located in the trench of loosened soil created by the front tine 7 and the depth wheel 107 running along the top of the soil behind the seed delivery member. Thus, in normal use the disc coulter 5, front tine 7, seed delivery member 105 and depth wheel 107 are all in line behind one another.

However, the seed delivery assembly 101 is able to move both upwardly and downwardly and laterally from side-to-side independently of the soil loosening assembly 3. The provision of a parallelogram assembly allows the seed delivery member, and therefore the seed delivery foot, to rise and fall relative to the clamp and also to the soil loosening assembly without any change in its orientation and this ensures that seed is distributed from the seed delivery foot in an unchanging pattern, so ensuring that seed is distributed in a reliable manner at a constant predetermined depth and is not directed either downwardly into the soil or upwardly onto the top of the soil.

When the first axis is inclined, this encourages the seed delivery member 105 to run straight within the trench of loosened soil due to gravity urging the seed delivery member towards its lowest point and therefore improving the accuracy of sowing. Thus, any lateral movement of the seed delivery member, for example to avoid an obstruction or when turning, is minimised due to the self-centring effect resulting from the inclination of the first axis as described above. Improved accuracy of seed sowing also allows for subsequent inter-row drilling (which involves re-positioning the seed drills laterally along the transverse frame member of the apparatus) and allows an additional crop to be planted (such as a grass crop beneath growing maize) between established crop rows. The lack or any inclination of the first axis would allow the seed delivery members to drift laterally into the established crop rows, thus risking damage to the crop. As an alternative, the seed delivery member may be used to insert fertiliser into the soil on either side of established crop rows to help to reduce any loss of nutrients due to evaporation.

Significantly, as noted above, the provision of two universal joints to replace pivot assembly providing an upright (vertical or inclined) pivot axis and two further pivot arrangements providing substantially horizontal axes confers several advantages. For example, the number of components is reduced thereby simplifying manufacture and reducing the number of different components required to be stocked. In addition, combining three pivot assemblies into two reduces both the weight and the overall length of the seed delivery assembly, allowing the seed delivery member and depth wheel to be closer to the clamp and reducing the load applied to the clamp and to the universal joints and consequential wear. Moreover, the use of the universal joints simplifies manufacture by eliminating any risk of misalignment.

It will be clear that modifications may be made to the described embodiments without departing from the present invention, which is defined by the appended claims.

## Claims

1. A soil cultivator seed drill comprising:
a toolbar connection member (1);
a parallelogram assembly (103) comprising a pair of substantially parallel arms (109,111), each connected at one end thereof to the toolbar connection member (1) and at the other end thereof to a connecting member (117) which interconnects the two other ends;
a seed delivery member (105) mounted on the connecting member (117); and
a depth controlling member (107) mounted on the connecting member (117) for determining the depth at which the seed delivery member (105) sows seed;
wherein each of the parallel arms (109,111) is connected to the toolbar connection member (1) by way of a universal joint (113, 115) or by way of a pivot assembly (119, 121) which is pivotable about a substantially horizontal axis, and each of the parallel arms (109,111) is connected to the connecting member (117), by the other of a universal joint (113, 115) or a pivot assembly (119, 121) which is pivotable about a substantially horizontal axis, respectively.

2. The soil cultivator seed drill as claimed in claim 1, wherein each of the parallel arms (109,111) is connected to the toolbar connection member (1) by way of a respective universal joint (113, 115) and connected to the connecting member (117) by way of a respective pivot assembly (119, 121) which is pivotable about a substantially horizontal axis.

3. The soil cultivator seed drill as claimed in claim 1, wherein each of the parallel arms (109,111) is connected to the toolbar connection member (1) by way of a respective pivot assembly (119, 121) which is pivotable about a substantially horizontal axis and connected to the connecting member (117) by way of a respective universal joint (113, 115).

4. The soil cultivator seed drill as claimed in claim 1, 2 or 3, wherein the two universal joints (113, 115) are located on an axis which is generally upright/substantially vertical.

5. The soil cultivator seed drill as claimed in claim 1, 2 or 3, wherein the two universal joints (113, 115) are located on an axis which is inclined to the vertical in a range of 10 to 45 degrees, preferably 18 to 30 degrees.

6. The soil cultivator seed drill as claimed in claim 5, wherein an upper universal joint (113) is positioned rearwardly of a lower universal joint (115) in a direction of forward movement of the seed drill, the parallelogram assembly (103) being located rearwardly of the toolbar connection member (1) in the direction of forward movement of the seed drill.

7. The soil cultivator seed drill as claimed in any one of the preceding claims, wherein the seed delivery member (105) is mounted on the connecting member (117) in a manner which allows the depth at which seed is sown to be adjusted relative to the connecting member (117).

8. The soil cultivator seed drill as claimed in any one of the preceding claims, wherein the depth controlling member (107) is connected to an end of one of the parallel arms (109,111) remote from the toolbar connection member (1) by way of an arm (127) and to an end of the other of the parallel arms (109,111) by way of an adjustment mechanism (129) which allows the position of the depth controlling member (107) relative to the parallelogram assembly (103) to be adjusted.

9. The soil cultivator seed drill as claimed in any one of the preceding claims, wherein biasing means extend between the parallel arms (109,111) for controlling the stiffness of the parallelogram assembly (103).

10. The soil cultivator seed drill as claimed in claim 9, wherein the biasing means comprises an adjustable hydraulic cylinder (133).

11. The soil cultivator seed drill as claimed in any one of the preceding claims, further comprising a soil loosening assembly (3).

12. The soil cultivator seed drill as claimed in claim 11 , wherein the soil loosening assembly (3) extends forwardly of the toolbar connection member (1) in the direction of forward movement of the seed drill.

13. The soil cultivator seed drill as claimed in claim 11 or claim 12, wherein the soil loosening assembly (3) includes a tine (7) for creating a trench filled with loosened soil.

14. The soil cultivator seed drill as claimed in claim 13, wherein the tine (7) is mounted so as to allow the depth of penetration thereof into the soil to be adjusted.

15. The soil cultivator seed drill as claimed in claim 13 or 14, wherein the tine (7) is mounted for rotation about a substantially horizontal axis in a rearward direction relative to the direction of forward movement of the seed drill.

16. The soil cultivator seed drill as claimed in claim 15, further comprising biasing means to control rearward movement of the tine (7).

17. The soil cultivator seed drill as claimed in any one of claims 13 to 16, wherein a disc coulter (5) is provided forward of the tine (7) in the direction of forward movement of the seed drill.

18. The soil cultivator seed drill as claimed in claim 17, wherein the disc coulter (5) is mounted by way of a caster assembly (21) which is pivotable about an upright axis.

19. The soil cultivator seed drill as claimed in claim 17 or claim 18 wherein the caster assembly (21) is mounted on an arm (19) that is pivotable about a substantially horizontal axis.

20. The soil cultivator seed drill as claimed in claim 17, 18 or 19 wherein biasing means is provided for resisting upward movement of the disc coulter (5).

21. The soil cultivator seed drill as claimed in claim 20, wherein the biasing means comprises a compression spring (23).

22. The soil cultivator seed drill as claimed in any one of claims 17 to 21 , wherein the tine (7) and disc coulter (5) are provided in line with the seed delivery member (105).

23. An agricultural apparatus comprising a frame member and at least one soil cultivator seed drill according to any one of the preceding claims, the at least one soil cultivator seed drill connected to the frame member by the toolbar connection member (1).

24. The apparatus as claimed in claim 23, wherein the toolbar connection member (1) comprises a clamp.

## Patentansprüche

1. Eine Bodenbearbeitungs-Sämaschine, umfassend:
ein Werkzeugleiste-Verbindungsglied (1);
eine Parallelogramm-Baugruppe (103), die ein Paar von im Wesentlichen parallelen Armen (109, 111) umfasst, die jeweils an ihrem einem Ende mit dem Werkzeugleiste-Verbindungsglied (1) und an ihrem anderen Ende mit einem die beiden anderen Enden miteinander verbindenden Verbindungsglied (117) verbunden sind;
ein Saatgutzuführungsglied (105), das am Verbindungsglied (117) angebracht ist; und
ein Tiefenregelungsglied (107), das am Verbindungsglied (117) angebracht ist, um die Tiefe zu bestimmen, in der das Saatgutzuführungsglied (105) Saatgut aussät;
wobei jeder der parallelen Arme (109, 111) mit dem Werkzeugleiste-Verbindungsglied (1) über ein Universalgelenk (113, 115) oder über eine Drehanordnung (119, 121) verbunden ist, die um eine im Wesentlichen horizontale Achse verschwenkbar ist, und jeder der parallelen Arme (109, 111) mit dem Verbindungsglied (117) über das jeweils andere von einem Universalgelenk (113, 115) oder einer Drehanordnung (119, 121) verbunden ist, die um eine im Wesentlichen horizontale Achse verschwenkbar ist.

2. Die Bodenbearbeitungs-Sämaschine nach Anspruch 1, wobei jeder der parallelen Arme (109, 111) mit dem Werkzeugleiste-Verbindungsglied (1) über ein entsprechendes Universalgelenk (113, 115) verbunden ist und mit dem Verbindungsglied (117) über eine entsprechende Drehanordnung (119, 121) verbunden ist, die um eine im Wesentlichen horizontale Achse verschwenkbar ist.

3. Die Bodenbearbeitungs-Sämaschine nach Anspruch 1, wobei jeder der parallelen Arme (109, 111) mit dem Werkzeugleiste-Verbindungsglied (1) über eine Drehanordnung (119, 121) verbunden ist, die um eine im Wesentlichen horizontale Achse verschwenkbar ist und mit dem Verbindungsglied (117) über ein entsprechendes Universalgelenk (113, 115) verbunden ist.

4. Die Bodenbearbeitungs-Sämaschine nach Anspruch 1, 2 oder 3, wobei die beiden Universalgelenke (113, 115) auf einer Achse angeordnet sind, die generell aufrecht/ im Wesentlichen vertikal ist.

5. Die Bodenbearbeitungs-Sämaschine nach Anspruch 1, 2 oder 3, wobei die beiden Universalgelenke (113, 115) auf einer Achse angeordnet sind, die in einem Bereich von 10 bis 45 Grad, vorzugsweise 18 bis 30 Grad, vertikal geneigt ist.

6. Die Bodenbearbeitungs-Sämaschine nach Anspruch 5, wobei ein oberes Universalgelenk (113) in Richtung der Vorwärtsbewegung der Sämaschine hinter einem unteren Universalgelenk (115) angeordnet ist, wobei die Parallelogramm-Baugruppe (103) in Richtung der Vorwärtsbewegung der Sämaschine hinter dem Werkzeugleiste-Verbindungsglied (1) angeordnet ist.

7. Die Bodenbearbeitungs-Sämaschine nach einem der vorgenannten Ansprüche, wobei das Saatgutzuführungsglied (105) auf dem Verbindungsglied (117) so angebracht ist, dass die Tiefe, in der das Saatgut ausgesät wird, relativ zum Verbindungsglied (117) eingestellt werden kann.

8. Die Bodenbearbeitungs-Sämaschine nach einem der vorgenannten Ansprüche, wobei das Tiefenregulierungsglied (107) mit einem Ende eines der parallelen Arme (109, 111), das von dem Werkzeugleiste-Verbindungsglied (1) entfernt ist, über einen Arm (127) und mit einem Ende des anderen der parallelen Arme (109, 111) über einen Einstellmechanismus (129) verbunden ist, der die Einstellung der Position des Tiefenregulierungsglieds (107) relativ zu der Parallelogramm-Baugruppe (103) möglich macht.

9. Die Bodenbearbeitungs-Sämaschine nach einem der vorgenannten Ansprüche, wobei sich zwischen den parallelen Armen (109, 111) Spannelemente zur Regulierung der Steifigkeit der Parallelogramm-Baugruppe (103) erstrecken.

10. Die Bodenbearbeitungs-Sämaschine nach Anspruch 9, wobei die Spannelemente einen einstellbaren Hydraulikzylinder (133) umfassen.

11. Die Bodenbearbeitungs-Sämaschine nach einem der vorgenannten Ansprüche, die ferner eine Bodenlockerungsbaugruppe (3) umfasst.

12. Die Bodenbearbeitungs-Sämaschine nach Anspruch 11, wobei sich die Bodenlockerungsbaugruppe (3) in Richtung der Vorwärtsbewegung der Sämaschine vor dem Werkzeugleiste-Verbindungsglied (1) erstreckt.

13. Die Bodenbearbeitungs-Sämaschine nach Anspruch 11 oder Anspruch 12, wobei die Bodenlockerungsbaugruppe (3) einen Zinken (7) zur Herstellung einer mit gelockertem Boden gefüllten Furche aufweist.

14. Die Bodenbearbeitungs-Sämaschine nach Anspruch 13, wobei der Zinken (7) so angebracht ist, dass seine Eindringtiefe in den Boden eingestellt werden kann.

15. Die Bodenbearbeitungs-Sämaschine nach Anspruch 13 oder 14, wobei der Zinken (7) um eine im Wesentlichen horizontale Achse relativ zur Richtung der Vorwärtsbewegung der Sämaschine nach hinten drehbar gelagert ist.

16. Die Bodenbearbeitungs-Sämaschine nach Anspruch 15, die ferner Vorspannmittel zur Steuerung der Rückwärtsbewegung des Zinkens (7) umfasst.

17. Die Bodenbearbeitungs-Sämaschine nach einem der Ansprüche 13 bis 16, wobei in Richtung der Vorwärtsbewegung der Sämaschine vor dem Zinken (7) ein Scheibensech (5) vorgesehen ist.

18. Die Bodenbearbeitungs-Sämaschine nach Anspruch 17, wobei das Scheibensech (5) über eine um eine aufrechte Achse schwenkbare Laufrollenbaugruppe (21) gelagert ist.

19. Die Bodenbearbeitungs-Sämaschine nach Anspruch 17 oder Anspruch 18, wobei die Laufrollenbaugruppe (21) an einem Arm (19) angebracht ist, der um eine im Wesentlichen horizontale Achse verschwenkbar ist.

20. Die Bodenbearbeitungs-Sämaschine nach Anspruch 17, 18 oder 19, wobei ein Vorspanmittel vorgesehen ist, das der Aufwärtsbewegung des Scheibensechs (5) entgegenwirkt.

21. Die Bodenbearbeitungs-Sämaschine nach Anspruch 20, wobei das Vorspannmittel mit einer Druckfeder (23) ausgestattet ist.

22. Die Bodenbearbeitungs-Sämaschine nach einem der Ansprüche 17 bis 21, wobei der Zinken (7) und das Scheibensech (5) in einer Linie mit dem Saatgutzuführungsglied (105) vorgesehen sind.

23. Eine landwirtschaftliche Vorrichtung, umfassend ein Rahmenglied und mindestens eine Bodenbearbeitungs-Sämaschine nach einem der vorhergehenden Ansprüche, wobei die mindestens eine Bodenbearbeitungs-Sämaschine durch das Werkzeugleiste-Verbindungsglied (1) mit dem Rahmenglied verbunden ist.

24. Die Vorrichtung nach Anspruch 23, wobei das Werkzeugleiste-Verbindungsglied (1) eine Klemme umfasst.

## Revendications

1. Semoir cultivateur de sol comprenant :
un élément de connexion de la barre d'outils (1) ;
un assemblage de parallélogrammes (103) comprenant une paire de bras sensiblement parallèles (109, 111), chacun étant relié à une extrémité à l'élément de connexion de la barre porte-outils (1) et à l'autre extrémité à un élément de connexion (117) qui relie les deux autres extrémités ;
un élément de distribution des semences (105) monté sur l'élément de connexion (117) ; et
un élément de contrôle de la profondeur (107) monté sur l'élément de connexion (117) pour déterminer la profondeur à laquelle l'élément de distribution de la semence (105) sème la semence ;
dans lequel chacun des bras parallèles (109,111) est relié à l'élément de connexion de la barre porte-outils (1) au moyen d'un joint universel (113, 115) ou d'un ensemble pivotant (119, 121) qui peut pivoter autour d'un axe sensiblement horizontal, et chacun des bras parallèles (109,111) est relié à l'élément de connexion (117) par l'autre joint universel (113, 115) ou par un ensemble pivotant (119, 121) qui peut pivoter autour d'un axe sensiblement horizontal, respectivement.

2. Semoir cultivateur du sol selon la revendication 1, dans lequel chacun des bras parallèles (109,111) est relié à l'élément de connexion de la barre porte-outils (1) au moyen d'un joint universel respectif (113, 115) et relié à l'élément de connexion (117) au moyen d'un ensemble pivotant respectif (119, 121) qui peut pivoter autour d'un axe substantiellement horizontal.

3. Semoir cultivateur du sol selon la revendication 1, dans lequel chacun des bras parallèles (109,111) est relié à l'élément de connexion de la barre porte-outils (1) au moyen d'un ensemble pivotant respectif (119, 121) qui peut pivoter autour d'un axe sensiblement horizontal et qui est relié à l'élément de connexion (117) au moyen d'un joint universel respectif (113, 115).

4. Semoir cultivateur de sol Iselon la revendication 1, 2 ou 3, dans lequel les deux joints universels (113, 115) sont situés sur un axe qui est généralement droit/substantiellement vertical.

5. Semoir cultivateur de sol selon la revendication 1, 2 ou 3, dans lequel les deux joints universels (113, 115) sont situés sur un axe qui est incliné par rapport à la verticale dans une plage de 10 à 45 degrés, de préférence de 18 à 30 degrés.

6. Semoir cultivateur du sol selon la revendication 5, dans lequel un joint universel supérieur (113) est positionné à l'arrière d'un joint universel inférieur (115) dans la direction du mouvement vers l'avant du semoir, l'assemblage de parallélogrammes (103) étant situé à l'arrière de l'élément de connexion de la barre porte-outils (1) dans la direction du mouvement vers l'avant du semoir.

7. Semoir cultivateur du sol selon l'une quelconque des revendications précédentes, dans lequel l'élément de distribution de la semence (105) est monté sur l'élément de liaison (117) d'une manière qui permet de régler la profondeur à laquelle la semence est semée par rapport à l'élément de liaison (117).

8. Semoir cultivateur du sol selon l'une quelconque des revendications précédentes, dans lequel l'élément de contrôle de la profondeur (107) est relié à une extrémité de l'un des bras parallèles (109,111) éloigné de l'élément de connexion de la barre porte-outils (1) au moyen d'un bras (127) et à une extrémité de l'autre des bras parallèles (109,111) au moyen d'un mécanisme de réglage (129) qui permet de régler la position de l'élément de contrôle de la profondeur (107) par rapport à l'ensemble de parallélogrammes (103).

9. Semoir cultivateur du sol selon l'une quelconque des revendications précédentes, dans lequel des moyens de pression s'étendent entre les bras parallèles (109,111) pour contrôler la rigidité de l'assemblage de parallélogrammes (103).

10. Semoir cultivateur du sol selon la revendication 9, dans lequel le moyen de pression comprend un cylindre hydraulique réglable (133).

11. Le semoir-cultivateur sol selon l'une quelconque des revendications précédentes, comprenant en outre un ensemble d'ameublissement du sol (3).

12. Semoir cultivateur du sol selon la revendication 11, dans lequel l'ensemble d'ameublissement du sol (3) s'étend vers l'avant de l'élément de connexion de la barre porte-outils (1) dans la direction du mouvement vers l'avant du semoir.

13. Semoir cultivateur du sol selon la revendication 11 ou la revendication 12, dans lequel l'ensemble d'ameublissement du sol (3) comprend une dent (7) pour créer une tranchée remplie de terre ameublie.

14. Semoir cultivateur du sol selon la revendication 13, dans lequel la dent (7) est montée de façon à permettre le réglage de sa profondeur de pénétration dans le sol.

15. Semoir cultivateur du sol selon la revendication 13 ou 14, dans lequel la dent (7) est montée pour tourner autour d'un axe sensiblement horizontal dans une direction arrière par rapport à la direction du mouvement vers l'avant du semoir.

16. Le semoir cultivateur du sol selon la revendication 15, comprenant en outre des moyens de pression pour contrôler le mouvement vers l'arrière de la dent (7).

17. Semoir cultivateur du sol selon l'une des revendications 13 à 16, dans lequel un soc à disque (5) est prévu à l'avant de la dent (7) dans la direction du mouvement vers l'avant du semoir.

18. Semoir cultivateur du sol selon la revendication 17, dans lequel le soc à disque (5) est monté au moyen d'un ensemble de roulettes (21) qui peut pivoter autour d'un axe vertical.

19. Semoir cultivateur du sol selon la revendication 17 ou la revendication 18, dans lequel l'ensemble de roulettes (21) est monté sur un bras (19) qui peut pivoter autour d'un axe sensiblement horizontal.

20. Semoir cultivateur du sol selon la revendication 17, 18 ou 19, dans lequel un moyen de pression est prévu pour résister au mouvement du soc à disque (5) vers le haut.

21. Semoir cultivateur du sol selon la revendication 20, dans lequel le moyen de sollicitation comprend un ressort de compression (23).

22. Semoir cultivateur du sol selon l'une des revendications 17 à 21, dans lequel la dent (7) et le disque (5) sont alignés avec l'élément de distribution de la semence (105).

23. Appareil agricole comprenant un châssis et au moins un semoir cultivateur du sol selon l'une quelconque des revendications précédentes, au moins un semoir cultivateur du sol étant relié au châssis par l'élément de connexion de la barre porte-outils (1).

24. Appareil selon la revendication 23, dans lequel l'élément de connexion de la barre porte-outils (1) comprend une pince.
